# EUROPEAN PATENT APPLICATION

(11) **EP 1 059 793 A2**
(43) Date of publication of application: **13.12.2000**
(21) Application number: 00304782.6
(22) Date of filing: 06.06.2000
(51) Int. Cl.: H04L 29/06, G06F 1/00

(54) **Server for dialup connection**

(30) Priority: 08.06.1999 JP 16065899
(71) Applicant: SEGA ENTERPRISES, LTD., Tokyo 144-8531 (JP)
(72) Inventor: Shimizu, Yusuke, Sega Enterprises, Ltd., Tokyo 144-8531 (JP)
(74) Representative: Billington, Lawrence Emlyn

(57) **Abstract**

The present invention relates to a server for dialup connection to give higher security on a dialup connection. In the server for dialup connection according to the present invention, when employing a public telephone network to execute a dialup connection, a caller's telephone number, which is informed from an exchange, gives higher security for authentication, in addition to the conventional ID number and password. According to the above-described invention, an unknown person, who illegally obtains the ID number and the password, cannot obtain an authentication, unless the unknown person employs the subscriber's line to execute a dialup connection, so that it becomes possible to give higher security for authentication. Since the telephone number is informed from an exchanger of a communication provider, not from the subscriber, therefore, there is no need to require more operations to subscriber and that makes it possible to give higher security level for authentication.

## Description

The present invention relates to a server for dialup connection, and more particularly, to an improvement in authentication at the time of a dialup connection from a subscriber .

Most Internet connections are executed by dialup connection from a public telephone network. In this case, the subscriber ID number and password for a call to be connected by dialup are received from a caller, after setting a line offhook, and an authentication whether or not the access is executed from a correct subscriber is executed according to the subscriber ID number and the password. If it is authenticated that the access is executed from the correct subscriber, then, in a game service employing a membership system through an Internet, the subscriber can play a battle game with other subscribers who join the same communication network, for example. As a result, the fee for using the game service is charged to the accessing subscribers.

However, as described above, only the ID number and password of the subscriber are checked when executing an authentication with charging the fee, and therefore, it is not necessarily high security. Especially, when required ID number and password are transmitted through an Internet, there are possibilities that an unknown person steals the ID number and password and employs the ID number and password to receive chargeable services with bad or criminal intent.

Accordingly, it is an object of the present invention to provide a server for dialup connection having a high authenticating level of the subscriber at a dialup connection time.

In a server for dialup connection according to the present invention, since a telephone number of a caller is informed from an exchange when a public telephone network is employed to execute a dialup connection, a higher security for authentication is given by employing the informed telephone number for the authentication.

Since a person cannot obtain the authentication, unless another person, who illegally obtains the ID number and the password, employs the subscriber's line to execute a dialup connection, it becomes possible to make the security for authentication higher. The telephone number is informed from an exchanger of the communication provider, not from the subscriber, so that the security level for authentication can be higher without requesting additional operations to the subscriber. When setting the line is offhooked after checking whether or not the telephone number coincides with that of the correct subscriber telephone number, the server can abbreviate an operation of receiving a useless ID number and password.

According to a first aspect of the present invention, a server which executes predetermined processes in response to a dialup connection, obtains a client's telephone number in response to a call executed by a dialup connection from a client, receives an ID number and a password from the client, and executes an authentication of the subscriber according to the ID number, the password and the telephone number.

Additionally, when the telephone number is a main number registered by the subscriber, the server may permit execution either of addition, change, deletion, or invalid setting of the telephone number.

Further, when an invalid setting of the telephone number is executed, the telephone number may not be checked on the authentication.

According to a second aspect of the present invention, a server for dialup connection, which executes predetermined processes in response to a dialup connection, obtains a client's telephone number, in response to a call executed by a dialup connection from the client, checks whether or not the client's telephone number coincides with the correct subscriber's number, after setting the line offhook when both telephone numbers are coincident, and receives the ID number and the password from the client so as to execute the authentication of the subscriber according to the ID number and the password.

According to a third aspect of the present invention, a server for dialup connection, which executes predetermined processes in response to a dialup connection, includes a main authenticating server which obtains a client's telephone number in response to a call executed by a dialup connection from the client, checks whether or not the telephone number is coincident with a correct subscriber's number, receives an ID number and a password transmitted from the client, after setting the line offhook when both telephone numbers coincide with each other, and executes an authentication of the subscriber according to the ID number and the password. A sub authenticating server, which sets the line offhook when the main authenticating server does not set the dialup connection offhook, receives the ID number and the password from the client and executes predetermined authenticating processes.

Fourth and fifth aspects of the present invention are provided by attached claims 10 and 12.

### BRIEF DESCRIPTION OF THE PRESENT INVENTION

Fig.1 is a diagram showing a relationship between a server and a client according to an embodiment of the present invention.
Fig. 2 is a first flowchart for authentication according to an embodiment of the present invention.
Fig. 3 is a second flowchart for authentication according to an embodiment of the present invention.
Fig. 4 is a third flowchart for authentication according to an embodiment of the present invention.
Fig. 5 is a structural diagram of another authenticating server according to an embodiment of the present invention.
Fig. 6 is a structural diagram of another authenticating server according to an embodiment of the present invention.
Fig. 7 is a structural diagram of another authenticating server according to an embodiment of the present invention.
Fig. 8 is a structural diagram of another authenticating server according to an embodiment of the present invention.

### DESCRIPTION OF THE PREFERRED EMBODIMENTS

Hereinafter, preferred embodiments of the present invention are described with reference to the drawings. However, the technical scope of the present invention is not limited to these embodiments.

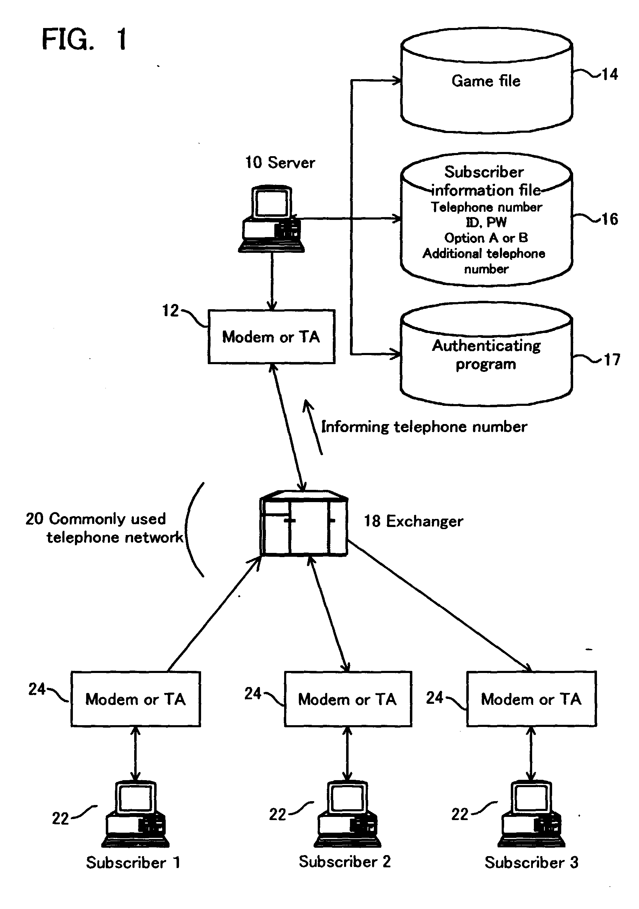

Fig. 1 is a diagram showing a relationship between a server and a client according to an embodiment of the present invention. A structure where personal computers 22 owned by a plurality of subscribers are respectively connected to a modem or terminal adapter 12 from each of modems or terminal adapters 24 through a public telephone network 20 is shown in Fig. 1. The server 10 provides various game services to subscribers by connecting lines (hereinafter, it is called offhook), in response to a dialup connection from the subscribers, for example. However, the present invention is not restricted to a game service, and is applicable to provide other predetermined services.

A game file 14 for presenting game services, a subscriber information file 16 where information for authenticating subscribers is stored, and a program file 17 for authentication are connected to the server 10.

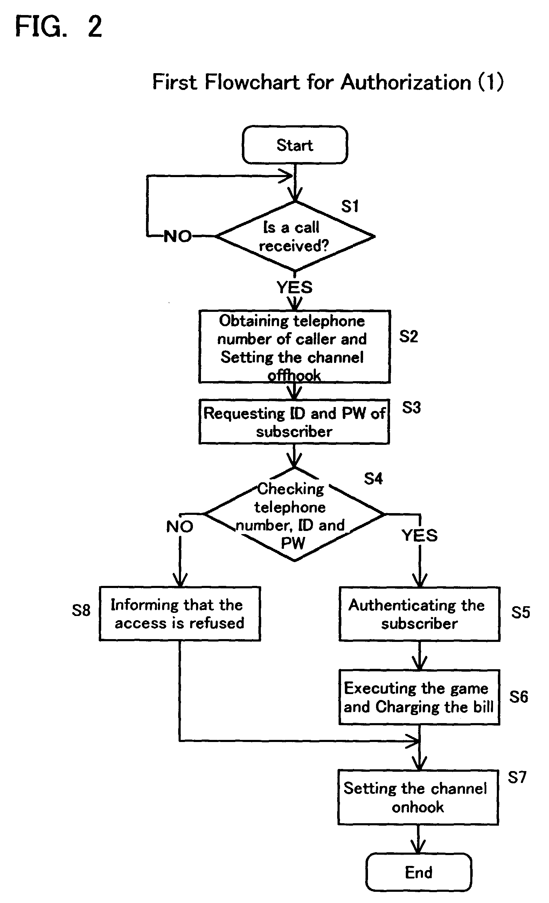

When a subscriber 1 employs a dialup connection to access the server 10, a client 22, which is a personal computer of the subscriber, employs the modem or terminal adapter 24 to try executing a dialup connection. In this case, an exchanger 18 informs the telephone number of the client, which is a caller to the server 10, according to one service of a communication provider and executes ringing. The server 10 executes the program 17 for authentication, employs the information stored in the subscriber information file 16 to execute the authentication whether or not the accessed client is owned by a correct subscriber according to the informed telephone number, and the subscriber ID number and the password, which are previously used for authentication. Various types of procedures of authentication program can be supposed. The procedures will be explained in reference to Figs. 2 to 4, as follows.

Fig. 2 shows a first flowchart for authentication according to an embodiment of the present invention. In the example of the authentication shown in Fig. 2, when the server 10 receives a call (S1), the server 10 obtains the telephone number of the caller informed from the communication provider according to the authenticating program 17 and connects the line (setting the line offhook) (S2). Then, the server 10 requests the subscriber ID number and the password corresponding to the subscriber ID number, and receives them (S3). The server 10 executes the authentication whether or not the obtained telephone number is coincident with that registered to the subscriber ID number and the authentication whether or not the received password is coincident with that registered to the subscriber ID number in reference to the subscriber information file 16 (S4).

Confirmation of the telephone number prevents an illegal access from another person who obtains the ID number and the password illegally with bad intent. The confirmation of password makes it possible to specify the person eventually for the access from any other subscriber who lives in the same house as the correct subscriber, for example, having the same telephone number.

When coincidence of the telephone number and the password for the ID number is confirmed, the authentication whether or not the subscriber is a correct person is completed (S5), and a predetermined game service is presented to the subscriber. When the service presentation is performed, a predetermined charging to the subscriber is executed. Various types of charging methods can be supposed, for example, a method employing credit cards, a charging method by the use of automatically paying from a bank account with a debit card, and a charging method with an electric money system. When the presentation of game service is finished, the telephone line is disconnected (the line is set offhook) (S7).

Alternatively, when it is detected that either of the telephone number or the password for the ID number is not coincident, it is judged that the access is illegal, the server informs to the client that the access is refused (S8) and the telephone line is disconnected (S7).

According to the above-described authentication, the level of authentication whether or not the subscriber is correct becomes higher than that in the prior art. Moreover, there is no need to require more operations other than the conventional operations such as transmission of ID number and password against the subscriber. That makes it possible not to increase the operations of a subscriber and to increase the security level.

To execute the above-described authentication in a server, a terminal equipment of a client should register a password for a predetermined ID number and a telephone number employed on a dialup connection in the server on the registration before the service presentation

The ID number should be a unique number or symbol for all clients. Accordingly, a service provider generally gives the number. Alternatively, the unique number or symbol given to hardware of the terminal equipment on the client is employed. For example, a production number of the game machine when employing a game machine, an identification number of a CPU when employing a personal computer, an identification number of a LAN card attached to a computer,can be used as the ID number.

The password is a combination of numbers and symbols, which can be optionally set by a user for these ID numbers. The telephone number is supplied to the called person, when an exchanger in a public telephone network receives a call from user's telephone.

Accordingly, the password and telephone number are registered in the server on the registration of the ID number. When the dialup connection is executed after that, only the above-described combination of the ID number and password is transmitted from the terminal equipment to the server, and the telephone number is further transmitted from the exchanger.

When the production number of the game machine is employed as an ID number, the server registers the ID number in association to the password for the ID number. When executing the dialup connection from the game machine, the user may transmit only the password. Alternatively, when executing the dialup connection from the other game machine away from the home, the setting of the registered telephone number in the server should be changed and a memory card where the production number is recorded should be attached to the other game machine. Thereby, the other game machine recognizes the ID number in the memory card so that the ID number can be transmitted with the password to the server.

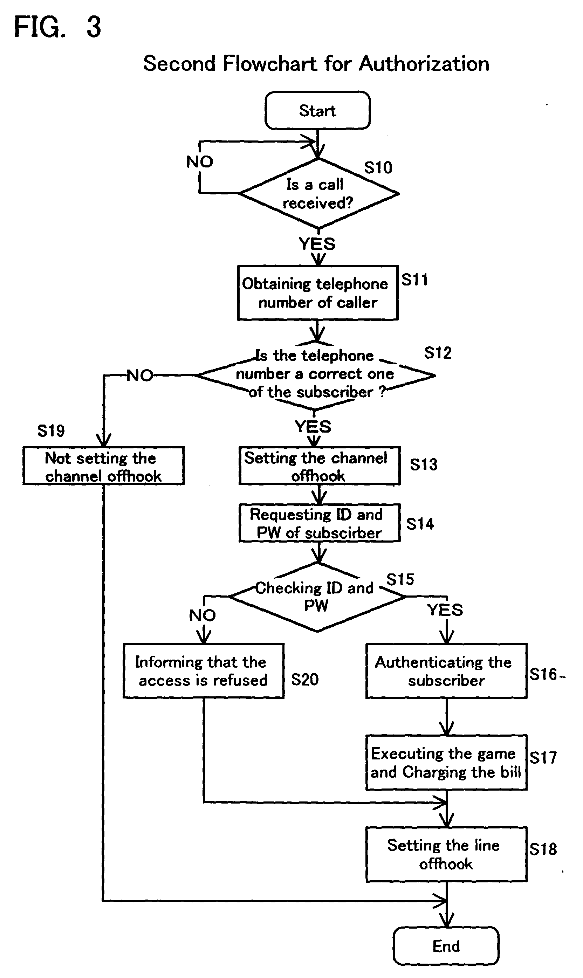

Fig. 3 is a second flowchart for authentication according to an embodiment of the present invention. In the example of the authentication shown in Fig. 3, when the server receives a call (S10), the server 10 obtains the telephone number of a caller informed from the communication provider according to the authenticating program 17 (S11). The server 10 executes the authentication whether or not the telephone number of the caller is a correct one of the registered regular subscriber according to the authenticating program 17 (S12), and when it is detected that the telephone number is not coincident with the registered one, the authenticating process is finished without connecting the telephone line (setting the line offhook). Therefore, there is no need to execute a process of checking the useless ID number with the password without connecting the access from the caller who accesses with a bad purpose.

When the obtained telephone number is coincident with the registered correct one, the telephone line is connected (the line is set offhook) (S13), and the server requests and receives the subscriber's ID number and password (S14). When ID numbers and the passwords are coincident (S15), the caller is authenticated as a correct subscriber (S16), a service such as the game execution is presented with charging the fee, and the line is set offhook after finishing the service (S18). When the ID numbers and the passwords are not coincident, the server informs that the access is refused (S20) and the line is set offhook (S18).

According to the above-described flowcharts for authentication, since the check whether or not the telephone number informed from the communication provider is coincident with one of the numbers registered for the subscriber is executed before setting the line offhook, the access from the person who illegally obtains ID number and password can be refused without setting the line offhook. Additionally, there is no need that the server 10 executes the useless authenticating procedures for ID number and password against the illegal accesses.

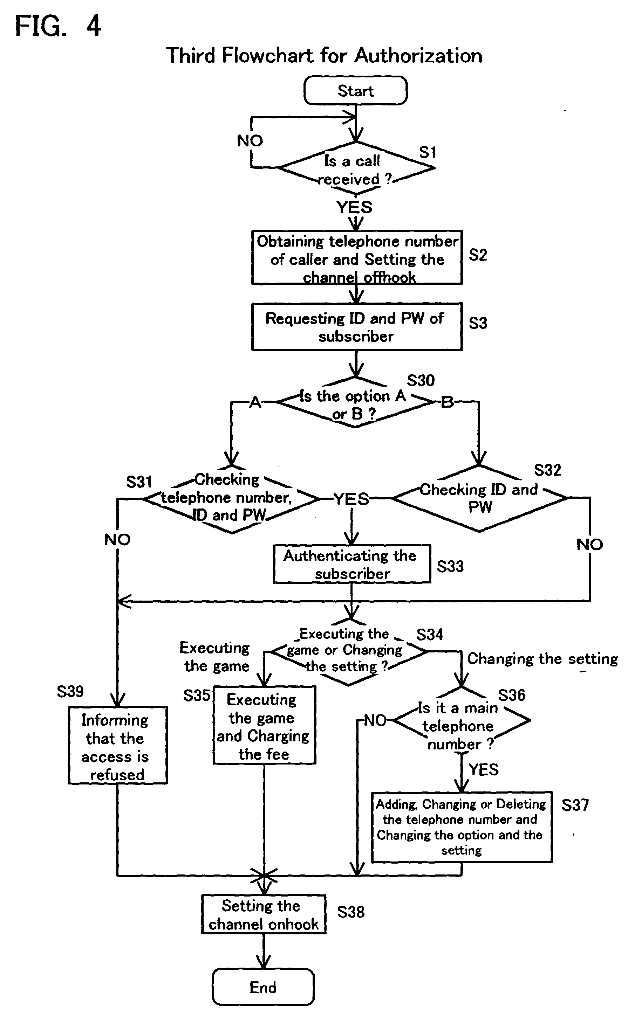

Fig. 4 is a third flowchart for authentication according to an embodiment of the present invention. The authenticating procedure makes it possible that correct subscribers can execute dialup connection from a line other than the registered main telephone number. It is a feature of the authenticating procedure that the correct subscriber can select an option A where the authenticating procedure by the use of the telephone number becomes valid or an option B where the authenticating procedure becomes invalid. Secondly, the correct subscriber can add, registers, and delete the other telephone number as a line to be connected by dialup in addition to a main telephone umber. Alternatively, it becomes possible to change the main telephone number. The change of the above-described option, addition and deletion of the other telephone number or a registering procedure of changing the main telephone number can be always performed only when accessing from the registered main telephone number, the access from the person who illegally obtains ID number and password can be prevented, and the correct subscriber can access from one line other than the main telephone number, which is the subscriber's home telephone number.

As explained according to Fig. 4, steps S1 to S3 are the same as those of the first flowchart shown in Fig. 2. In other words, the server 10 obtains the telephone number to be informed and sets the line offhook (S2), requests the subscriber ID number and the password, and obtains them. Since the telephone number is also set to an option A, which is used on the authenticating procedures, generally, the option A is detected on a step (S30) of selecting the option A or B. Then, it is checked whether or not the telephone number and the password are coincident with those registered for the ID number (S31), similar to the first flowchart. When those are coincident, the called person is authenticated as a correct subscriber (S33). When those are not coincident, then, the server informs that the access is refused against the dialup connection (S39) and sets the line onhook (S38).

In the flowchart of Fig. 4, there is a menu of changing the setting other than a presentation menu, such as a game execution service, as a menu after the authentication. If the menu is a normally used game service presentation menu, the fee is charged after the game is executed (S35), and the server sets the line offhook and disconnects the telephone line, at last (S38). When the menu of changing the setting is selected, the server 10 checks whether or not the dialup connection is accessed from the main telephone number at first and permits setting an additional telephone number, setting deleting and changing the telephone number, or changing the option A to B (S37). Thereby, it becomes possible to prevent from changing the setting by a person who illegally obtains the ID number and the password.

Even if the subscriber accesses from the telephone line other than the main telephone number on the step S30, when the setting is changed to the option B on the above-described setting changing step, only the authentication according to the ID number and the password is executed on the step S31, and therefore, the subscriber can access from other locations. Further, when the addition of the telephone number is set, if the subscriber accesses from the added telephone number on the step S31, the subscriber is certified as a regular subscriber, and therefore, it becomes possible to access from other locations having telephone numbers other than the main telephone number.

A procedure of changing into the option A or deleting the additional telephone number can be also executed, even when accessing from other telephone numbers other than the main telephone number, not shown in Fig. 4. These procedures of changing the setting are useless for the illegally accessing persons, there is no problem even if the procedure is executed when accessing from other telephone numbers than the main telephone number, and therefore, that gives correct subscribers degrees of freedom of changing the setting. The authenticating program 17 of the server 10 executes the above-described authenticating processes. Alternatively, the above-described authenticating processes can be employed from an Internet service provider, for example.

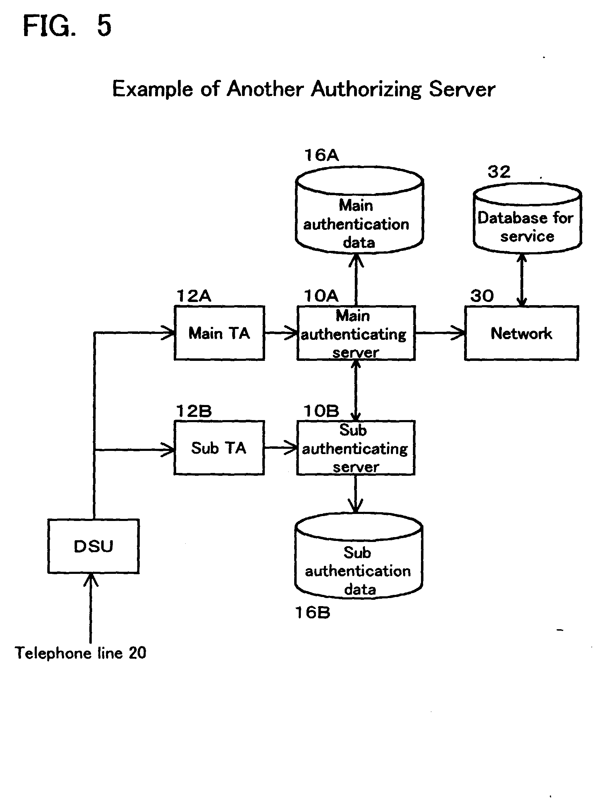

Fig. 5 shows a structure of another authenticating server according to an embodiment of the present invention. In the example, when a telephone number other than the registered correct one is informed, the access is recognized as an illegal access and the response is returned to the line as if a dummy authenticating server, which does not present correct services, authorizes the access.

Fig. 5 shows an example where the public telephone network 20 is ISDN. A main authenticating server 10A and a sub authenticating server 10B receive a call through a DSU and terminal adapters 12A, 12B. When the call from the public telephone network 20 is received, the main terminal adapter 10A informs the caller's telephone number to the main authenticating server 10A. Then, the sub terminal adapter 10B also receives the call at the same time.

The main authenticating server 10A refers the main authentication data 16A to check whether or not the caller's telephone number is a correct one of the registered correct subscriber. The authentication data 16A is same as the subscriber information file 16 which includes the telephone number, ID, and password. When the caller's telephone number is coincident with the registered correct subscriber's telephone number, the main authenticating server 10A sets the line offhook, receives the subscriber ID number and the password, checks whether or not the password is the registered one referring to the main authentication data 16A, and connects the call to the network 30, which presents services, when both passwords are coincident. If not coincident, the server sets the line offhook and disconnects the line.

The network 30 is, for example, a local network (LAN) where accesses to a database 32 for service or a predetermined closed intra network, and therefore, only when the caller's telephone number is the registered correct one and is authenticated according to the subscriber ID and the password, is access permitted. Then, the service is presented and the fee is charged.

The main authenticating server 10A does not set the line offhook, when the caller's telephone number is not coincident with the registered one. Then, the main server 10A informs that to the sub authenticating server 10B.

The sub authenticating server 10B sets the line offhook, in response to information showing that the caller's telephone number is not coincident with the above-described registered one, receives the subscriber ID and the password, and executes the authentication in reference to the sub authentication data 16B. The authentication processes may be a dummy authentication, where a dummy authentication data 16B is employed. Additionally, normal authentication processes may be executed as this authentication process. In either case, it is an important point to make some authenticating processes look like real processes for the illegal caller. When the ID number and the password are not coincident, the sub authenticating server 10B sets the line onhook and acts as if it executes the authenticating processes. But, even when the ID number and the password are coincident, the sub authenticating server 10B also rejects the access.

However, the sub authenticating server 10B does not connect the line to the network 30 where the services can be presented, even if the ID and the password are coincident, for example. Specifically, when the caller's telephone number is not coincident with the registered one, the access to the network 30 presenting a service with a condition of charging the fee is denied.

Further, the above-described sub authenticating server 10B may execute dummy authenticating processes by receiving the call and setting the line offhook after a constant time elapsed without replying the information showing that the telephone numbers are not coincident, transmitted from the main authenticating server 10A.

According to the above-described embodiment of the present invention, when the caller's telephone number is not coincident with the registered one, the connection to the network 30 is denied, and therefore, a higher security level for the service can be provided. Additionally, even if both telephone numbers are not coincident, the sub authenticating server 10B executes dummy authenticating processes, instead of the main authenticating server 10A, and therefore, the caller can not check if the caller is connected to either the main authenticating server 10A or the sub authenticating server 10B, thus that makes it difficult for an illegal third person to know that the call is refused on the authentication process according to the telephone number, and makes it possible to prevent further hacking . Therefore, it becomes possible to keep a higher security level.

Moreover, since the hacker can connect only the sub authenticating server 10B when accessing the service, the hacker can hack and illegally obtain only the sub authenticating data 16B connecting to the sub authenticating server 10B. Because the sub authentication data 16B is different from the correct main authentication data 16A, it becomes possible to prevent illegal accessing after that.

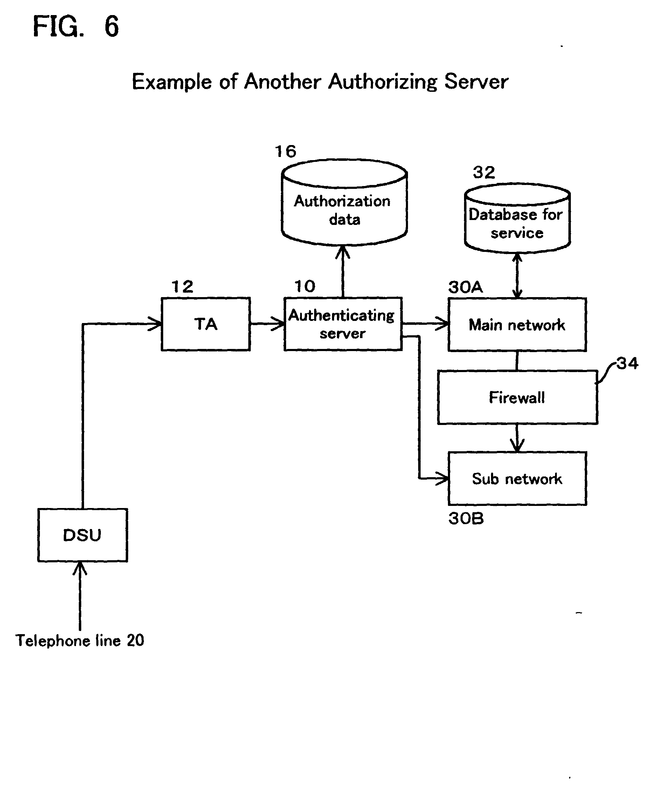

Fig. 6 further shows a structural diagram of another authenticating server according to an embodiment of the present invention. The structure of this example includes a main network 30A having a higher security level, and a sub network 30B having a lower security level. When the caller's telephone number is coincident with the registered one, the server 10 permits connecting the line to the main network 30A. In contrast when both telephone numbers are not coincident, the server 10 permits connecting the line only to the sub network 30B and inhibits accessing the line to the main network 30A, which presents useful services from the caller. Thereby, it becomes possible to prevent hacking anymore by making the hacker who illegally obtains the ID number and the password, after making the hacker pass the authentication virtually.

A firewall 34 is provided between the main network 30A and the sub network 30B to permit accessing from the main network 30A to the sub network 30B and not to permit accessing from the sub network 30B to the main network 30A.

The firewall 34 prevents entering from one network to the other network to make it possible to access from the other network to the one network. Therefore, the firewall 34 is provided between the main network 30A and the sub network 30B to improve only one way access as described above.

At first, the authenticating server 10 receives a call from a public telephone network 20 through a DSU and a terminal adapter 12. When the server receives a call from the public telephone line 20, the terminal adapter 12 informs the caller's telephone number to the authenticating server 10.

The authenticating server 10 checks whether or not the caller's telephone number is the registered correct subscriber's one in reference to the authentication data 16. When both telephone numbers are coincident, the authenticating server 10 sets the line offhook, receives the subscriber ID number and the password, checks whether or not the password is the registered one, and connects the line to the main network 30A where services can be presented, when both passwords are coincident. When both passwords are not coincident, the server 10 sets the line onhook and disconnects the line.

The main network 30A may be a local area network (LAN), which makes it possible to access a database 32 for service, or a predetermined closed intra-network. Only when the caller's telephone number is the registered correct one and is authenticated according to the subscriber ID and the password, can the caller access the network 30A. Then, the fee of the service presentation is also charged to the caller.

When the caller's telephone number is not coincident with the registered one, the authenticating server 10 sets the line offhook, receives the subscriber ID number and the password, and checks whether or not the received password is coincident with the registered one in reference to the authentication data 16. When both passwords are coincident, the server 10 connects the line to the sub network 30B, and the server 10 sets the line offhook and disconnects the line when both passwords are not coincident.

The sub network 30B does not present a service having a higher security level, for example; however, it is a network having a lower security level, for example, a commonly used Internet. Further, the sub network 30B may permit accessing the line to a database, such as free software, not shown. In contrast to the sub network 30B, the main network 30A having a higher security level presents useful services for subscribers when connecting to the Internet and down-loading game programs with charging the fee.

In this example of the authenticating server, it becomes possible to provide services having a higher security level by the authentication process employing telephone numbers. Additionally, the server makes the hacker who illegally obtains the ID number and password look as if the hacker is normally authenticated, thus more incentive is not given on hacking improvement.

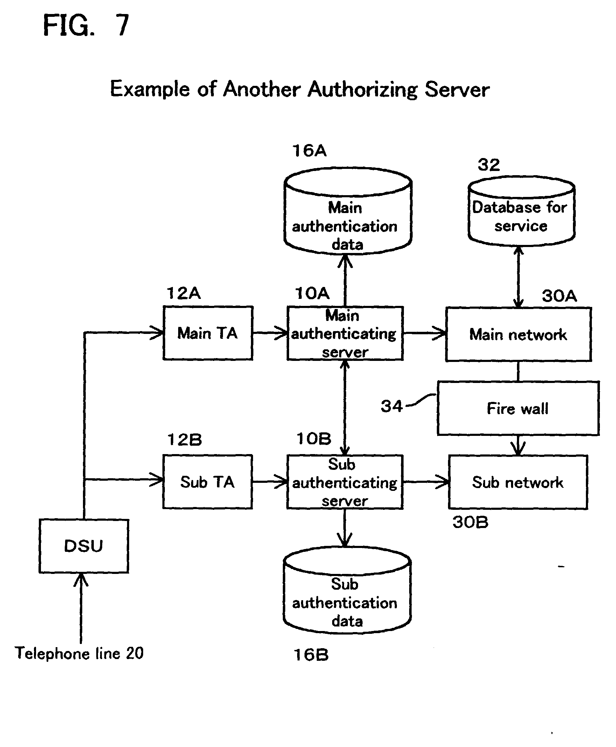

Fig. 7 further shows a structural diagram of another authenticating server according to an embodiment of the present invention. The structure is formed by combining the examples shown in Figs. 5 and 6. In other words, the main authenticating server 10A permits accessing the line to the main network 30A, when passwords are coincident.

On the other hand, when the caller's telephone number is not coincident with the registered one, the sub authenticating server 10B sets the line offhook, instead of the main authenticating server 10A, and employs the sub authentication data 16B to execute the authentication processes according to the subscriber ID number and the password. When passwords are coincident, the sub authenticating server 10B permits accessing the line to the sub network 30B. However, the sub network 30B is separated from the main network 30A by the firewall 34 to inhibit connecting the line to the main network 30A.

The serial authentication processes are the same as those in the case of Fig. 5. The different point is that the main network 30A presenting services having higher security level is separated by the firewall 34 from the sub network 30B where the access is permitted if both telephone numbers are not coincident.

Therefore, since the illegal hacking is connected only to the sub authenticating server 10B, when the telephone number is different from the registered one, in the example of Fig. 7, similarly to the case of Fig. 5, the sub authentication data 16B is dummy data, which is different from the correct authentication data 16A, and therefore, the illegal access can be prevented after that, if the sub authentication data 16B is stolen by hacking. Further, authenticating processes are executed for the illegal access and the security level is lower but some network accesses can be executed after executing the authentication processes according to the subscriber ID and the password, similarly to the case of Fig. 6, thus more incentive for doing more or improving the hacking is not given, thus making the security level higher.

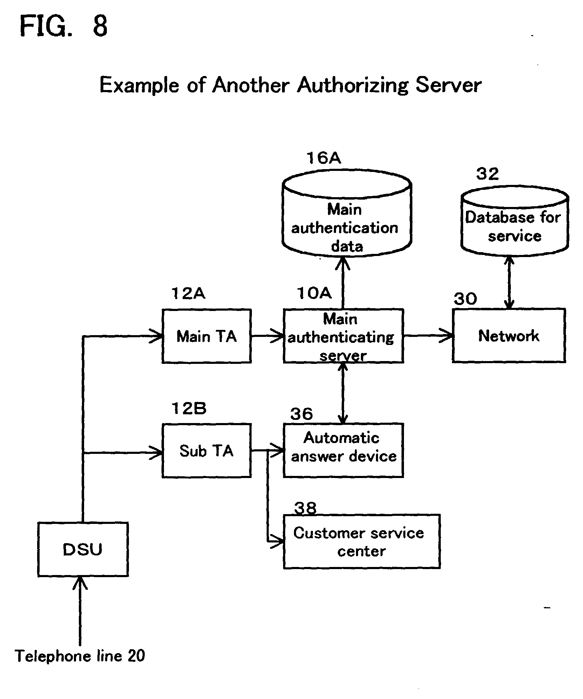

Fig. 8 is a diagram showing a structure of another authenticating server according to one embodiment of the present invention. A feature of this example is that an automatic answer device 36 or a customer service center 38 is provided, instead of the main authenticating server 10B of Fig. 5.

When receiving a call from a public telephone network 20, the main authenticating server checks whether or not the caller's telephone number is coincident with the registered one, in reference to the authentication data 16A, sets the line offhook, and connects the call when both telephone numbers are coincident. When both the telephone numbers are not coincident, the server does not set the line offhook. After setting the line offhook, the server employs the subscriber ID number and the password to execute authentication processes, and permits connecting the line to the network 30, when both passwords are coincident. When both passwords are not coincident, the server sets the line offhook and disconnects the line.

When the authenticating server 10A does not set the line offhook, the automatic response device 36 sets the line offhook after the information is received or a constant time has elapsed and transmits a message showing that the caller is not registered by voice. Alternatively, the caller is connected to an operator in a customer center 38, instead of the automatic response device 36, to cope with the illegal access. It may be set that the connection to the customer center 38 is executed at first time, when the time of responses replied by the automatic response device 36 exceeds than a predetermined time.

In this example, it becomes possible to make a security level of connecting the line to a network, which presents services according to authentication processes by the use of telephone number and to reduce incentive for more illegal accesses by informing the illegal access by voice. Additionally, in this example, the hacker who illegally accesses the network can not access to the authentication data 16A.

As is explained above, according to the present invention, since a telephone number obtained by a service of informing a caller's telephone number is employed to execute authentication of connection, when connecting a network by dialup, a higher security can be obtained without requesting additional operations to subscribers. Since a communication company performs the telephone number informing service, it is more difficult to illegally connect by a person who illegally obtains the ID number and the password.

## Claims

1. A server for dialup connection, which executes predetermined processes in response to a dialup connection, wherein:
the server obtains a telephone number of a client in response to a call executed by a dialup connection from the client, receives an ID number and password transmitted from the client, and executes an authentication of the subscriber according to the password and the telephone number.

2. The server for dialup connection according to claim 1, wherein the server permits execution either of addition, change, deletion or invalid setting of the telephone number, when the accessed telephone number is a main telephone number registered by the subscriber.

3. The server for dialup connection according to claim 1 or 2, wherein the server does not check the telephone number on the authenticating step, when the invalid setting of the telephone number is executed.

4. A server for dialup connection, which executes predetermined processes in response to a dialup connection, wherein:
the server obtains a telephone number of a client in response to a call executed by a dialup connection from the client, judges whether or not the telephone number coincides with the correct subscriber's telephone number, receives an ID number and a password from the client after setting the line offhook when both telephone numbers are coincident, so as to authenticate the subscriber according to the ID number and the password, and does not set the line offhook when both telephone numbers are not coincident.

5. The server for dialup connection according to claim 4, wherein:
the server permits execution either of addition, change, deletion or invalid setting of the telephone number, when the accessed telephone number is a main telephone number registered by the subscriber.

6. The server for dialup connection according to claim 2 or 5, wherein:
the server sets the line offhook without judging whether or not both telephone numbers are coincident, when an invalid setting of the telephone number is executed.

7. A server for dialup connection, which executes predetermined processes in response to a dialup connection, comprising:
a main authenticating server for obtaining a client's telephone number in response to a call executed by a dialup connection from the client, judging whether or not the telephone number is coincident with a correct subscriber's telephone number, receiving an ID number and a password from the client after setting the line offhook when both telephone numbers are coincident, and authenticating the subscriber according to the ID number and the password; and
a sub authenticating server for setting the line offhook, when the main authenticating server does not set the dialup connection offhook, receiving the ID number and the password transmitted from the client, and executing predetermined authenticating processes.

8. The server for dialup connection according to claim 7,
wherein the main authenticating server permits connecting to a main network where a predetermined service is presented, when the passwords are coincident by executing an authentication according to the ID number and the password, and does not permit connecting to the main network, when the passwords are not coincident.

9. The server for dialup connection according claim 8,
wherein the sub authenticating server permits connecting to a sub network different from the main network, when both passwords are coincident by executing an authentication according to the ID number and the password.

10. A server for dialup connection, which executes predetermined processes in response to a dialup connection, wherein:
the server obtains a client's telephone number in response to a call by the dialup connection received from the client, judges whether or not the telephone number is coincident with a correct subscriber's telephone number, receives an ID number and a password from the client, authenticates the subscriber according to the ID number, password and the telephone number, permits a connection to a main network where a predetermined service is presented, when both telephone numbers are coincident and the password is coincident, and permits a connection to a sub network being different from the main network, when both telephone numbers are not coincident and the password is coincident.

11. The server for dialup connection according to claim 9 or 10,
wherein a firewall is provided between the main network and the sub network, so as to inhibit connection from the sub network to the main network.

12. A client device connecting to a server with dialup connection and receiving presentation of predetermined services, wherein:
the client transmits a telephone number for dialup connection and a password for a predetermined ID number when registering them to the server, and at a dialup connection after that, transmits the predetermined ID number and the registered password to the server, receives the authentication of client device according to the ID number and the password transmitted to the server and the telephone number supplied from an exchanger in a public telephone network.
